# EUROPÄISCHE PATENTSCHRIFT

(11) **EP 0 459 437 B1**
(45) Veröffentlichungstag und Bekanntmachung des Hinweises auf die Patenterteilung: **12.10.1994**
(21) Anmeldenummer: 91108776.5
(22) Anmeldetag: 29.05.1991
(51) Int. Cl.: F16L 59/04

(54) **Kunststoffmantelrohr**
Plastic jacket pipe
Tuyau enveloppé en matière plastique

(30) Priorität: 01.06.1990 DE 4017702
(43) Veröffentlichungstag der Anmeldung: 04.12.1991
(73) Patentinhaber: GAS-, ELEKTRIZITÄTS- UND WASSERWERKE KÖLN AG., D-50823 Köln (DE)
(72) Erfinder: Gerke-Reineke, Lothar, Dipl.-Ing., W-6907 Nussloch (DE); Schleyer, Andreas, Dr.-Ing., W-6907 Nussloch (DE); Schröder-Wrede, Volker, Dipl.-Ing., W-5000 Köln 41 (DE)
(74) Vertreter: Koepsell, Helmut, Dipl.-Ing.

(56) Entgegenhaltungen:
- EP-A- 0 101 673
- EP-A- 0 188 340
- EP-A- 0 356 613
- DE-A- 3 333 508
- DE-U- 1 979 976
- DE-U- 7 732 727
- FR-A- 2 479 945
- GB-A- 2 055 442
- GB-A- 2 106 213
- BAUTECHNIK vol. 56, no. 12, 1987, Ernst & Sohn Verlag, Berlin (DE) Seite A8 "Neue Wärme-Dämm-Technologie für Rohre"
- RESEARCH DISCLOSURE. no. 226, Februar 1983, HAVANT (GB) Seite 61 "Apparatus for field installation of foam insulation on conduit"

## Beschreibung

Die Erfindung betrifft Leitungsrohre, die zur Wärmeisolierung mit einer Kunststoffummantelung versehen sind. Insbesondere betrifft die Erfindung Fernwärmeleitungsrohre, die über lange Strecken im Erdreich verlegt sind. Grundsätzlich ist die Erfindung aber auch bei anderen Leitungen anwendbar, bei welchen das zu transportierende Medium thermisch gegenüber dem Erdreich abgeschirmt werden muß. Im folgenden wird überwiegend von Fernwärmeleitungssystemen gesprochen, ohne daß damit eine Einschränkung verbunden sein soll. Ein Kunststoffmantelrohr gemäß dem Oberbegriff von Anspruch 1 ist aus der DE-U-1 979 976 bekannt.

Im allgemeinen ist bei derartigen Leitungen die Anordnung so getroffen, daß ein Mantelrohr aus Kunststoff das das Medium führende Stahlrohr umgibt, wobei sich zwischen Stahlrohr und Mantelrohr ein schäumbarer Isolierstoff, z. B. PUR-Schaum befindet. Der PUR-Schaum füllt den im allgemeinen ringförmigen Zwischenraum vollständig aus, so daß das innenliegende Stahlrohr fest mit dem Mantelrohr verbunden ist.

Die Verlegung von solchen Rohrleitungen erfolgt in der Regel derart, daß vorgefertigte Rohrschüsse, die eine Länge von beispielsweise 6, 12 oder 18 m aufweisen können, vor Ort zusammengeschweißt werden. Nach der Verbindung wird an der Nahtstelle nachträglich der Isolierschaum eingebracht, um eine möglichst vollständige Isolierung der Leitung zu erhalten.

Bei langen Rohrleitungen treten bei Temperaturänderungen aufgrund der Wärmedehnung teilweise erhebliche Längenänderungen auf, die in Knick- oder Bogenbereichen der Rohrleitung zu erhöhten Spannungen innerhalb der Isolierschicht führen. Die Isolierschicht, die im allgemeinen aus PUR-Schaum besteht, weist nur eine geringe Druckfestigkeit auf, die zudem im Laufe der langzeitigen Benutzungsdauer und wegen der erhöhten thermischen Belastung noch abnehmen kann. Derartige Spannungen würden daher zur Zerstörung oder zu unerwünschten Verformungen der Isolierschicht innerhalb der Knick- oder Bogenbereiche führen, wenn nicht besondere Gegenmaßnahmen durchgeführt werden.

Es ist bekannt, an jedem Knick- oder Bogenbereich einer Rohrleitung Dehnungspolster aus Schaumstoff vorzusehen, die eine freie Bewegung des Rohres in die Dehnungsrichtungen ermöglichen soll, ohne daß es mit dem nahezu unnachgiebigen Erdreich in Berührung kommt.

Es ist weiterhin bekannt, die Knick- und Bogenbereiche einer Leitung innerhalb von sogenannten Dehnungsbauwerken zu verlegen, so daß die Bereiche frei beweglich sind. Es ist offensichtlich, daß derartige Dehnungspolster oder Dehnungsbauwerke einen erhöhten Materialaufwand darstellen und einen erhöhten Installationsaufwand erfordern. Dies wird insbesondere dadurch ersichtlich, daß aufgrund der Wärmedehnung der Rohrleitung ca. alle 50 - 150 m sogenannte Dehnungsausgleicher in Form von Bögen oder anderen Kompensatoren vorgesehen werden müssen. Bei der Verwendung von Dehnungspolstern hat sich weiterhin gezeigt, daß deren Wirkungsweise nach einiger Zeit nachläßt, so daß sie mehrmals innerhalb der angestrebten Lebensdauer von Fernwärmeleitungsrohren ausgewechselt oder zumindest kontrolliert werden müssen, um Folgeschäden oder an der Rohrleitung an der Straßenoberfläche zu vermeiden.

Der Erfindung liegt daher die Aufgabe zugrunde, Rohrleitungen, die mit einer Isolierschicht umgeben sind, so auszugestalten und zu verbessern, daß die Verwendung von Dehnungspolstern oder Dehnungsbauwerken in Knick- oder Bogenbereichen nicht oder zumindest nicht überall erforderlich ist. Das ummantelte Rohr soll dabei unkompliziert in der Herstellung und leicht zu verlegen sein, so daß keine wesentlichen Mehrkosten auftreten. Insbesondere soll weiterhin eine ausreichende Isolierwirkung gewährleistet sein. Diese Aufgabe wird durch die Merkmale von Anspruch 1 gelöst.

Als Lösung schlägt die Erfindung vor, die Isolierschicht zumindest in Knick- oder Bogenbereichen der Rohrleitung durch granulatförmige, harte Körper zu verstärken. Dadurch wird eine erhöhte Druckfestigkeit der Isolierschicht erreicht, die die aus der Wärmedehnung resultierenden Spannungen aufnehmen kann. Die Packungsdichte wird dabei so gewählt, daß ein tragendes Gerüst zwischen Innenrohr und Mantelrohr gebildet wird. Besonders zweckmäßig kann dafür ein annähernd kugelförmiges Granulat mit in etwa einheitlichem Durchmesser verwendet werden. Mit einem derartigen Granulat wird einerseits eine hohe Packungsdichte der einzelnen Körner erzielt, wobei andererseits genügend Hohlraum für den Ausschäumvorgang vorhanden bleibt. Gute Wirkungen werden bei kleinen bis mittleren Nenndurchmessern des Innenrohres (z.B. d = 20 - 300mm) mit Kugeldurchmessern von ca. 10 mm erzielt. Die gewählte Packungsdichte hängt dabei unter anderem von den zu erwartenden Belastungen ab.

Vorteilhaft ist dabei die Verwendung von Verstärkungskörpern, die zudem noch eine gewisse Isolierwirkung aufweisen. Es werden daher Verstärkungskörper aus granulatförmigen Blähton der Blähglas besonders bevorzugt. Selbstverständlich können auch Verstärkungskörper aus anderen Materialien verwendet werden, die entsprechende Eigenschaften aufweisen.

Zweckmäßig kann es sein, das Granulat nicht nur im Bogenbereich, sondern auch noch entlang der Schenkel des Bogens z.B. bis zur nächsten Nahtstelle vorzusehen, um eine bessere Spannungsverteilung zu gewährleisten. Aufgrund der nunmehr höheren Spannungen innerhalb des Rohres wird es ggf. vorteilhaft sein, die Nahtbereiche in einem gewissen Abstand, beispielsweise 2 m vom Bogen anzuordnen.

Weiterhin kann es zweckmäßig sein, derartige granulatförmige Verstärkungskörper auch innerhalb gerader Rohrabschnitte vorzusehen, bei welchen höhere Druckbelastungen von außen, z. B. unter Straßen oder Gleisen, zu erwarten sind,
Durch die Erfindung wird der Verlegeaufwand von Rohrleitungen wesentlich verringert, da keine Dehnungspolster oder Dehnungsbauwerke mehr benötigt werden. Die Druckfestigkeit der Isolierschicht ist durch die granulatförmigen Verstärkungskörper so hoch, daß die durch die Wärmedehnung bewirkten Spannungen aufgenommen werden.

Bei derzeitig verwendeten Verbundrohren führen die Wärmedehnungen schon bei Knickwinkeln zwischen 3° und 6° zu unzulässigen Druckspannungen in der Isolierschicht, die dadurch beschädigt wird. Es ist daher notwendig, auch solche geringfügigen Knicke mit Dehnungspolstern, Ausgleichsbögen oder dgl. zu versehen. Da die Isolierschicht in dem Verbundrohr gemäß der Erfindung nunmehr eine höhere Festigkeit aufweist, können die Rohre auch mit größeren Winkeln als zwischen 3° und 6° verlegt werden Das Verbundrohr gemäß der Erfindung weist daher weiterhin den Vorteil auf, daß bei seiner Verlegung weniger Beschränkungen zu beachten sind.

Bei der üblichen Verlegung von Fernwärmeleitungsrohen ist es ggf. darüberhinaus noch erforderlich, die Rohre im warmen Zustand zu verlegen. Die Verlegetemperatur entspricht dabei einer mittleren Temperatur innerhalb des zu erwartenden Betriebstemperaturbereichs, der bei Fernwärmeleitungen in der Regel ca. 50-130°C beträgt. Dies hat zwar den Vorteil, daß das so verlegte Rohr sich nur noch um ein kleineres Maß dehnt oder zusammenzieht und somit große Wärmedehnungen in nur eine Richtung, wie sie bei der Kaltverlegung auftreten, vermieden werden. Durch diese Beanspruchung in wechselnden Richtungen kann daß Ausmaß und ggf. auch die Dauerfestigkeit der Dehnungspolster erhöht werden, da nur noch kürzere Wärmedehnungen des Verbundrohres auftreten. Es ist jedoch offensichtlich, daß eine derartige Verlegung den Installationsaufwand zusätzlich erhöht.

Bei der Ausbildung des Verbundrohres gemäß der Erfindung kann in manchen Fällen auf die Warmverlegung verzichtet werden. Durch die Verwendung des Granulats in der Isolierschicht in Bogen- und Knickbereichen kann deren Druckfestigkeit derart erhöht werden, daß bei kaltverlegten Rohren die Innenrohre aus Stahl beim ersten Hochfahren der Anlage durch die Wärmedehnung eine plastische Verformung erfahren, da nunmehr die Isolierschicht keine größeren Verformungen mehr erfährt und keine größere Dehnung des Rohres zuläßt. Danach wird sich das Rohr während des Normalbetriebes in Abhängigkeit von den Temperaturverhältnissen ebenfalls in kleineren, für die Belastung der Isolierschicht günstigeren Ausmaßen dehnen oder zusammenziehen.

Weiterhin hat sich herausgestellt, daß durch die Verwendung von Verstärkungskörpern, insbesondere Blähglas oder -ton, die Druckfestigkeit auch unter Langzeitbelastungen bei erhöhter Temperatur der schäumbaren Isolierschicht erhöht wird. Dies ist u.U. darauf zurückzuführen, daß das schäumbare Material aufgrund des höheren Fließwiderstandes unter erhöhtem Druck in den Zwischenraum gepresst werden muß, wodurch es nach der Aushärtung eine höhere Verdichtung erfährt und somit eine erhöhte Druckfestigkeit erhält.

Die Verbundrohre gemäß der Erfindung können in der Weise hergestellt werden, daß im Ringraum zwischen Innenrohr und Mantelrohr wenigstens ein Zuführrohr angeordnet ist, dessen Wandung perforiert ist. In dieses Zuführrohr wird die Substanz bzw. werden die Substanzen eingebracht, aus denen das die Isolierschicht bildende Material durch einen Schäumvorgang gebildet wird. Durch das Zuführrohr soll erreicht werden, daß die schäumende Masse trotz der durch die Verstärkungskörper verkleinerten und teilweise versperrten Fließwege eine ausreichend gleichmäßige Verteilung der Materialien erreicht wird, die die Isolierschicht bilden, in der die Verstärkungskörper eingebettet sind. Durch das Zuführrohr wird insbesondere erreicht, daß die schäumenden Materialien nach Verlassen des Zuführrohres keine großen Wegstrecken zurückzulegen haben. Im allgemeinen wird es zweckmäßig sein, innerhalb des Zuführrohres, das im fertigen Verbundrohr verbleibt, kein Granulat anzuordnen, um einen möglichst freien Fließweg für die schäumenden Materialien zu erhalten. Es ist dann vorteilhaft, das Zuführrohr im Bereich einer neutralen Faser anzuordnen. Dies bedeutet, daß das Zuführrohr im Bereich eines Bogens ober- oder unterhalb des Innenrohrs anzuordnen ist. Das Zuführrohr kann aus Kunststoff oder Metall bestehen, wobei auch mehrere derartige Zuführrohre zum Ausschäumen des Ringraumes vorgesehen sein können.

Es ist aber auch möglich, das Schäummittel unter hohem Druck von der Mitte des Bauteils aus in den Ringraum einzuleiten. Die dazu benötigte Öffnung oder benötigten Öffnungen in dem Mantelrohr wird bzw. werden anschließend verschweißt. Die Öffnung oder die Öffnungen ist bzw. sind daher zweckmäßigerweise in einer neutralen Faser angeordnet.

Zur Erzielung einer möglichst hohen Packungsdichte, kann es ggf. erforderlich sein, das Innenrohr und/oder das Mantelrohr in Schwingung zu versetzen, um somit eine bessere Verteilung der granulatförmigen Verstärkungskörper zu bewirken.

In der Zeichnung sind Ausführungsbeispiele der Erfindung dargestellt. Es zeigen:

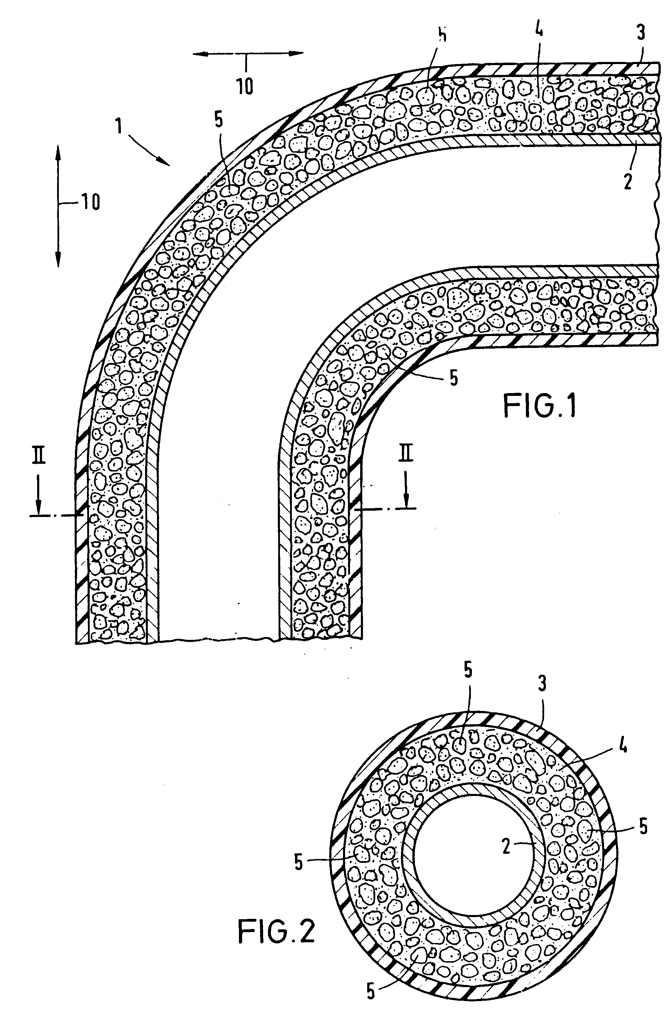

- Fig. 1: einen Längsschnitt eines Rohrabschnittes gemäß der Erfindung,
- Fig. 2: einen Schnitt nach der Linie II-II der Fig. 1,
- Fig. 3: einen Längsschnitt einer anderen Ausführungsform und
- Fig. 4: einen Schnitt nach der Linie IV-IV der Fig. 3.

In den Figuren sind gleiche Teile mit gleichen Bezugszeichen versehen. Der in der Zeichnung dargestellte 90°-Bogen 1 weist ein Innenrohr 2, durch welches ein Medium geleitet wird, und ein Außen- oder Mantelrohr 3 auf. In dem durch die beiden Rohre 2, 3 gebildeten, im wesentlichen ringförmigen Zwischenraum befindet sich eine Isolierschicht 4, die z. B. aus PUR-Schaum besteht Innerhalb der Isolierschicht 4 sind granulatförmige Elemente 5 aus z. B. Blähton oder Blähglas eingebettet. Die Anordnung ist dabei so getroffen, daß die einzelnen Granulatteilchen 5 aneinanderliegen und somit die durch die in Richtung der Doppelpfeile 10 auftretenden Wärmedehnungen bewirkten Spannungen aufnehmen.

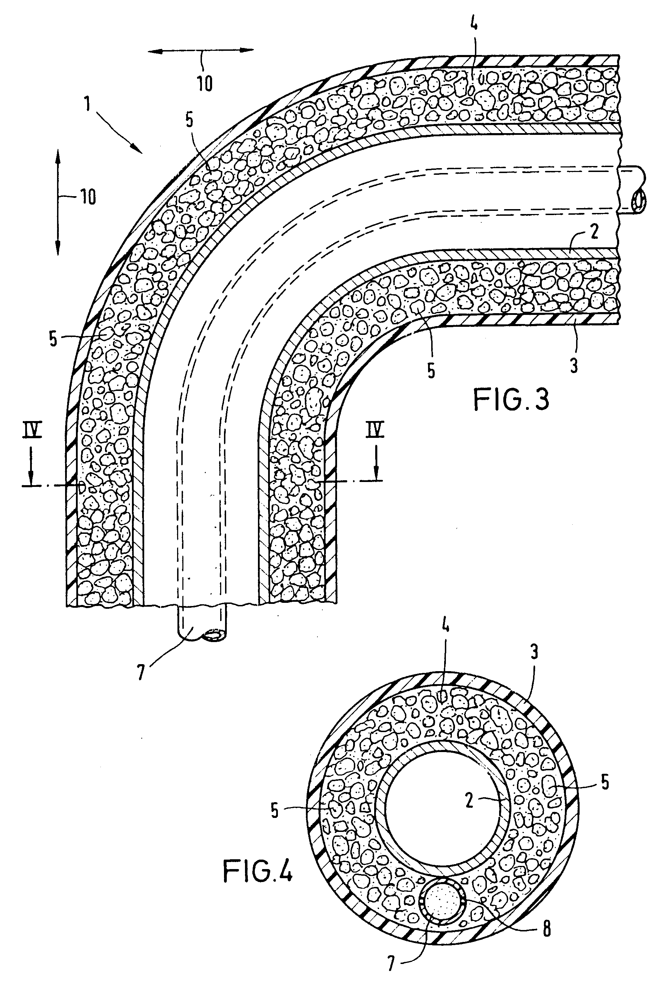

Bei dem in den Fig. 3 und 4 gezeigten Ausführungsbeispiel ist zur besseren Ausschäumung ein Zuführrohr 7 mit auf dessen Manteloberfläche angeordneten Perforationen 8 vorgesehen, durch welches das Schäummittel geleitet wird. Damit die durch das Granulat 5 bewirkte Verstärkung durch das Zuführrohr nicht oder nicht wesentlich beeinflußt wird, ist das Zuführrohr 7 entlang einer bezüglich der Wärmespannungen neutralen Faser des Rohrabschnitts, unterhalb des Innenrohrs 2 angeordnet. Es kann auch vorgesehen werden, daß das Zuführrohr 7 oberhalb des Innenrohres 2 verläuft. Zweckmäßig kann es dabei sein, daß das Zuführrohr 7 einen Außendurchmesser aufweist, der im wesentlichen dem Abstand zwischen Innenrohr 2 und Außenrohr 3 bei deren zueinander zentrierter Lage entspricht.

## Patentansprüche

1. Kunststoffmantelrohr für Rohrleitungen für den Transport von Medien, deren Temperatur erheblich über der Umgebungstemperatur liegt, mit wenigstens einem Innenrohr (2) aus Stahl und einem Mantelrohr (3) und einer zwischen Innenrohr und Mantelrohr angeordneten Schicht (4) aus isolierendem Material, in die granulatförmige Verstärkungskörper (5) eingebettet sind, die eine größere Festigkeit als das die Isolierschicht (4) bildende Material aufweisen, dadurch gekennzeichnet, daß das Knick- und/oder Bogenbereiche aufweisende und als Verbundrohr ausgebildete Kunststoffmantelrohr, bei welchem das Innenrohr (2) fest mit dem Mantelrohr (3) verbunden ist, und zumindest in den in den Knick- und/oder Bogenbereichen der Rohrleitung zu verlegenden Verbundrohrabschnitten das Granulat (5) mit möglichst großer Packungsdichte in dem ringförmigen Zwischenraum angeordnet ist, um ein tragendes Gerüst zwischen Innenrohr (2) und Mantelrohr (3) zu bilden, welches die aus der Wärmedehnung in den Knick- und/oder Bogenbereichen der Rohrleitung resultierenden Spannungen aufnimmt.

2. Kunststoffmantelrohr nach Anspruch 1, dadurch gekennzeichnet, daß das Granulat (5) Blähglas oder Blähton ist.

3. Kunststoffmantelrohr nach Anspruch 1, dadurch gekennzeichnet, daß das Granulat aus etwa kugelförmigen Körnern (5) besteht.

4. Kunststoffmantelrohr nach Anspruch 3, dadurch gekennzeichnet, daß das Granulat aus etwa kugelförmigen Körnern (5) mit im wesentlichen gleichen Durchmessern besteht.

5. Verfahren zum Verlegen im Erdreich eines Kunststoffmantelrohres für Rohrleitungen für den Transport von Medien, deren Temperatur erheblich über der Umgebungstemperatur liegt, mit wenigstens einem Innenrohr (2) aus Stahl und einem Mantelrohr (3) und einer zwischen Innenrohr und Mantelrohr angeordneten Schicht (4) aus isolierendem Material, in die granulatförmige Verstärkungskörper (5) eingebettet sind, die eine größere Festigkeit als das die Isolierschicht (4) bildende Material aufweisen, dadurch gekennzeichnet, daß das Knick- und/oder Bogenbereiche aufweisende und als Verbundrohr ausgebildete Kunststoffmantelrohr, bei welchem das Innenrohr (2) fest mit dem Mantelrohr (3) verbunden ist, und zumindest in den in den Knick- und/oder Bogenbereichen der Rohrleitung zu verlegenden Verbundrohrabschnitten das Granulat (5) mit möglichst großer Packungsdichte in dem ringförmigen Zwischenraum angeordnet ist, um ein tragendes Gerüst zwischen Innenrohr (2) und Mantelrohr (3) zu bilden, welches die aus der Wärmedehnung in den Knick- und/oder Bogenbereichen der Rohrleitung resultierenden Spannungen aufnimmt, auch in den Bogen- und/oder Knickbereichen in Berührung mit dem Erdreich verlegt wird.

6. Verfahren nach Anspruch 5, dadurch gekennzeichnet, daß die Rohrleitung kalt verlegt wird und die Innenrohre beim ersten Hochfahren der Rohrleitung durch die Wärmedehnung eine plastische Verformung erfahren.

## Claims

1. A plastics jacket pipe for pipelines for transporting media whose temperature is considerably above the ambient temperature, comprising at least one inner pipe (2) of steel and a jacket pipe (3) and a layer (4) of insulating material which is arranged between the inner pipe and the jacket pipe and into which are embedded reinforcing bodies (5) which are in granulate form and which are of greater strength than the material forming the insulating layer (4), characterised in that the plastics jacket pipe which has elbow and/or bend regions is in the form of a composite pipe in which the inner pipe (2) is fixedly connected to the jacket pipe (3) and at least in the composite pipe portions to be laid in the elbow and/or bend regions of the pipeline the granulate (5) is arranged in the annular intermediate space with the maximum possible packing density in order to form between the inner pipe (2) and the jacket pipe (3) a supporting structure which carries the stresses resulting from thermal expansion in the elbow and/or bend regions of the pipeline.

2. A plastics jacket pipe according to claim 1 characterised in that the granulate (5) is expanded glass or expanded clay.

3. A plastics jacket pipe according to claim 1 characterised in that the granulate comprises approximately spherical grains (5).

4. A plastics jacket pipe according to claim 3 characterised in that the granulate comprises approximately spherical grains (5) of substantially identical diameters.

5. A method of laying in the ground a plastics jacket pipe for pipelines for transporting media whose temperature is considerably above the ambient temperature, comprising at least one inner pipe (2) of steel and a jacket pipe (3) and a layer (4) of insulating material which is arranged between the inner pipe and the jacket pipe and into which are embedded reinforcing bodies (5) which are in granulate form and which are of greater strength than the material forming the insulating layer (4), characterised in that the plastics jacket pipe which has elbow and/or bend regions and which is in the form of a composite pipe and in which the inner pipe (2) is fixedly connected to the jacket pipe (3) and at least in the composite pipe portions to be laid in the elbow and/or bend regions of the pipeline the granulate (5) is arranged in the annular intermediate space with the greatest possible packing density in order to form between the inner pipe (2) and the jacket pipe (3) a supporting structure which carries the stresses resulting from thermal expansion in the elbow and/or bend regions of the pipeline is also laid in contact with the ground in the bend and/or elbow regions.

6. A method according to claim 5 characterised in that the pipeline is laid cold and the inner pipes experience plastic deformation when the pipeline first starts up due to thermal expansion.

## Revendications

1. Enveloppe tubulaire en matière plastique pour des conduites de transport de fluides dont la température est largement supérieure à la température ambiante, comportant au moins un tuyau interne en acier (2) et une enveloppe tubulaire externe (3), ainsi qu'une couche (4) de matière isolante, disposée entre le tuyau interne et l'enveloppe externe, et dans laquelle sont enrobées des particules (5) d'un granulat de renfort ayant une solidité supérieure à celle de la matière de la couche isolante (4), caractérisée en ce que l'enveloppe tubulaire en matière plastique, qui comporte des parties coudées et/ou cintrée, est réalisée sous la forme d'un ensemble tubulaire composite dans lequel le tuyau interne (2) est lié rigidement à l'enveloppe tubulaire externe (3), et en ce que le granulat (5) est disposé avec une densité de garnissage aussi forte que possible dans l'interstice annulaire, au moins dans les parties coudées et/ou cintrées des tronçons de tuyauterie à mettre en place, afin de constituer un système porteur entre le tuyau interne (2) et le tuyau-enveloppe externe (3), pour que ce système porteur encaisse les contraintes produites par la dilatation thermique dans les parties coudées et/ou cintrées de la tuyauterie.

2. Enveloppe tubulaire en matière plastique selon la revendication 1, caractérisée en ce que le granulat (5) est constitué par du verre expansé ou de l'argile expansée.

3. Enveloppe tubulaire en matière plastique selon la revendication 1, caractérisée en ce que le granulat est constitué par des grains (5) sensiblement sphériques.

4. Enveloppe tubulaire en matière plastique selon la revendication 3, caractérisée en ce que le granulat est constitué par des grains (5) sensiblement sphériques ayant tous sensiblement le même diamètre.

5. Procédé pour réaliser et poser dans le sol une enveloppe tubulaire en matière plastique ayant des parties coudées et/ou cintrées pour des conduites de transport de fluides dont la température est largement supérieure à la température ambiante, comportant au moins un tuyau interne en acier (2) et une enveloppe tubulaire externe (3) ainsi qu'une couche (4) de matière isolante disposée entre le tuyau interne et l'enveloppe tubulaire et dans laquelle sont enrobées des particules (5) d'un granulat de renfort ayant une solidité supérieure à celle de la matière de la couche isolante, caractérisé en ce que l'enveloppe tubulaire en matière synthétique ayant des parties coudées et/ou cintrées est réalisée sous la forme d'un ensemble tubulaire composite dans lequel le tuyau interne (2) est lié rigidement à l'enveloppe tubulaire (3) et comporte un garnissage de granulat (5) réalisé avec la plus forte densité possible dans l'interstice annulaire, au moins dans les parties coudées et/ou cintrées des tronçons de l'ensemble tubulaire composite, afin de constituer un système porteur entre le tuyau interne (2) et l'enveloppe tubulaire (3), pour encaisser les contraintes dues à la dilatation thermique à l'endroit des parties coudées et/ou cintrées de la tuyauterie qui est posée au contact du sol même dans ses parties coudées et/ou cintrées.

6. Procédé selon la revendication 5, caractérisé en ce qu'on effectue la pose de la tuyauterie à froid, et en ce que les tuyaux internes subissent une transformation plastique sous l'effet de la dilatation thermique au moment de la première mise en service de la tuyauterie.
